# EUROPÄISCHE PATENTSCHRIFT

(11) **EP 0 794 413 B1**
(45) Veröffentlichungstag und Bekanntmachung des Hinweises auf die Patenterteilung: **20.11.2002**
(21) Anmeldenummer: 97250063.1
(22) Anmeldetag: 06.03.1997
(51) Int. Cl.: G01G 19/14, B66C 13/16, B66D 3/08

(54) **Messeinrichtung mit einem Lastmesselement**
Measuring device with a load measuring element
Dispositif de mesure avec un élément de mesure de charge

(30) Priorität: 08.03.1996 DE 19610662
(43) Veröffentlichungstag der Anmeldung: 10.09.1997
(73) Patentinhaber: Demag Cranes & Components GmbH, 58300 Wetter (DE)
(72) Erfinder: Fänger, Alfred, Dipl.-Ing., 58300 Wetter (DE); Gersemky, Udo, Dipl.-Ing., 58313 Herdecke (DE); Zacharias, Karl, Dipl.-Ing., 58239 Schwerte (DE)
(74) Vertreter: Presting, Hans-Joachim, Dipl.-Ing.

(56) Entgegenhaltungen:
- DE-B- 1 106 050
- DE-B- 1 250 993
- US-A- 4 112 750

## Beschreibung

Die Erfindung betrifft eine Meßeinrichtung mit einem Lastmeßelement für Hebezeuge, insbesondere für Oberflaschen von Hebezeugen, mit einer zur Aufnahme und Aufteilung von Lastkräften vorgesehenen Achse, deren Enden auf einer Seite über ein Lager und auf der anderen Seite über das Lastmeßelement in einer Tragvorrichtung abgestützt und axial fixiert sind.

Aus der Komponentenhandbuch '95/96 der Mannesmann Demag Fördertechnik AG, Wetter, ist eine Meßeinrichtung mit einem Lastmeßelement für Oberflaschen von Hebezeugen bekannt, die eine Achse aufweist, auf welcher eine frei drehbare Seilrolle abgestützt ist. Die Enden der Achse sind in einer Tragvorrichtung abgestützt und axial fixiert, auf einer Seite über ein Radialgelenklager und auf der anderen Seite über das Lastmeßelement, welches über entsprechende Verbindungselemente an der Tragvorrichtung befestigt ist. Durch die Achse werden die an der Seilrolle angreifenden Lastkräfte aufgenommen und zu etwa gleichen Teilen auf das Lastmeßelement und das Radialgelenklager aufgeteilt. Die Nachteile einer solchen Meßeinrichtung sind: Es ist ein relativ teures und aufwendiges Gelenklager erforderlich, das außerdem in axialer Richtung gesichert werden muß, was mit zusätzlichem Montageaufwand verbunden ist. Weiter benötigt diese Ausführungsform aufgrund des verwendeten Gelenklagers einen verhältnismäßig großen Bauraum. Auch kann es unter ungünstigen Bedingungen vorkommen, daß die Achse, die bei einem Radialgelenklager nicht gesichert werden kann, von der Drehbewegung der Seilrolle mitgenommen wird, wodurch das Lastmeßelement an der Kontaktstelle mit der Seilrollenachse beschädigt werden kann.

Aufgabe der Erfindung ist es daher, eine preiswerte, kleinbauende, axial- und verdrehgesicherte Meßeinrichtung mit einem Lastelement für eine Seilrollenlagerung für Oberflaschen von Hebezeugen zu schaffen.

Die Lösung dieser Aufgabe ist erfindungsgemäß gekennzeichnet durch die im Patentanspruch 1 angegebenen Merkmale. Durch die kennzeichnenden Merkmale der Unteransprüche 2 bis 9 ist die Meßeinrichtung in vorteilhafter Weise weiter ausgestaltbar.

Erfindungsgemäß ist das Lager derart ausgebildet, daß die Achse quer zu ihrer Längsrichtung eine Tangentialnut aufweist und in eine Öffnung der Tragvorrichtung mit einem Spiel eingesetzt ist, wobei das Spiel mindestens der Tangentialnut gegenüberliegend ausgebildet ist, und daß zur axialen Sicherung und zur Auflagerung der Achse an der Tragvorrichtung ein Lagerstift befestigt ist, wobei der Lagerstift mindestens teilweise in die Tangentialnut eingreift. Auf diese Weise wird die Meßeinrichtung mit einem Lager versehen, das kostengünstig und einfach herstellbar ist, wobei das Lager aufgrund seiner Bauweise eine Sicherung in axialer Richtung besitzt. Weiter wird für ein derartiges Lager nur noch ein verhältnismäßig geringer Bauraum benötigt. Der Lagerstift verhindert darüber hinaus ein Verdrehen der Achse; eine Mitnahme der Achse durch die sich drehende Seilrolle ist bei diesem Lager ausgeschlossen. Bei der erfindungsgemäßen Lösung übernimmt der Lagerstift zwei zuvor getrennte Funktionen: Er bildet den Schwenklagerpunkt und sichert gleichzeitig die Achse in axialer Richtung. Zusätzlich sorgt der Lagerstift für eine Verdrehsicherung der Achse.

Um Platz und Kosten zu sparen, wird mit der Erfindung vorgeschlagen, daß die Tragvorrichtung als seitliche Träger Tragbleche aufweist, welche am unteren Ende durch ein Distanzstück miteinander verbunden sind, um dennoch die Biegebeanspruchung gering zu halten. Dabei können die Tragbleche sehr dünn ausgeführt sein.

Eine vorzugsweise horizontale Bewegung der Achse wird dadurch erreicht, daß die Öffnungen oval ausgebildet sind, wobei die waagerechte Breite in etwa dem Durchmesser der Achse entspricht.

Vorteilhafterweise wird zur besseren Übertragung der Lastkräfte auf der Achse zumindest eine frei drehbare Seilrolle über ein Drehlager abgestützt.

Zweckmäßigerweise ist das Drehlager beidseitig über elastische Stützringe axial gehalten.

Die Tangentialnut ist vorzugsweise rechtwinklig zur Achsenlängsrichtung angeordnet, da diese die Schwenkachse definiert.

Das Lager läßt sich mit geringem Aufwand realisieren, wenn der Lagerstift als Zylinderschraube ausgebildet ist, die an der Tragvorrichtung verschraubt ist

Eine einfache Anpassung an verschiedene Lastangriffsrichtungen wird dadurch erzielt, daß die Tragvorrichtung in einem Tragrahmen rechtwinklig zur Achse schwenkbar gelagert ist.

Das Lastmeßelement wird vorzugsweise mit Dehnungsmeßstreifen oder mit Mikroschaltem bestückt, was eine einfache Erfassung der angreifenden Lastkraft ermöglicht.

Ein Ausführungsbeispiel der Erfindung ist in der Zeichnung dargestellt und wird nachfolgend näher beschrieben;

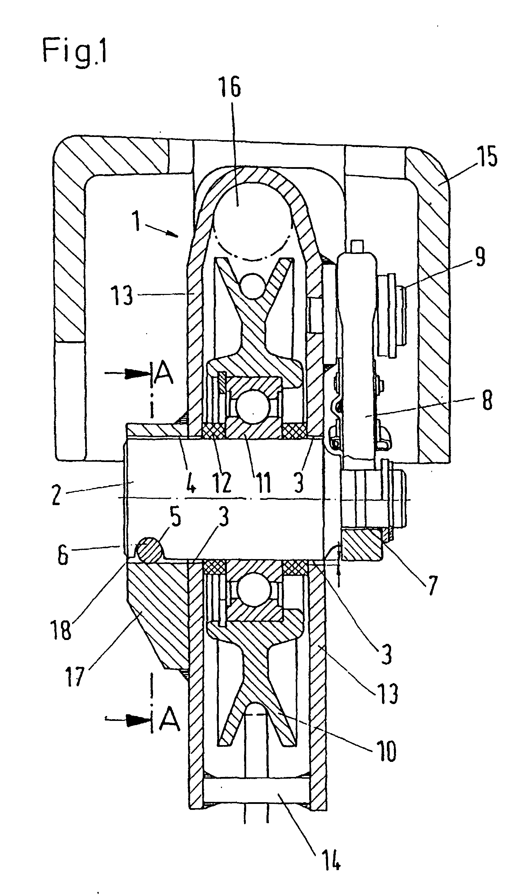

Es zeigen:
Fig. 1:
   einen Querschnitt durch eine Meßeinrichtung einer Oberflasche mit einem Lastmeßelement,
Fig. 2:
   eine um 30° geschwenkte Meßeinrichtung gemäß Fig. 1 und
Fig. 3:
   eine teilgeschnittene Darstellung gemäß der Schnittlinie A-A in Fig. 1.

Die in Fig. 1 im Querschnitt dargestellte Meßeinrichtung einer Oberflasche eines Hebezeugs besteht aus einer Tragvorrichtung 1, in der eine Achse 2 waagerecht angeordnet ist, deren Enden in seitlichen Trägern 13 der Tragvorrichtung 1 vorgesehene Öffnungen 3, 4 mit einem Spiel 18, d.h. unter Belassung eines Zwischenraums, durchdringen, wobei das Spiel 18 mindestens der Tangentialnut 5 gegenüberliegend ausgebildet ist. Zur axialen Sicherung und zur Auflagerung ist die Achse 2 an einem Ende mit einer Tangentialnut 5 versehen, in die ein Lagerstift 6 eingreift, der als Zylinderschraube ausgebildet und an der Tragvorrichtung 1 verschraubt ist.

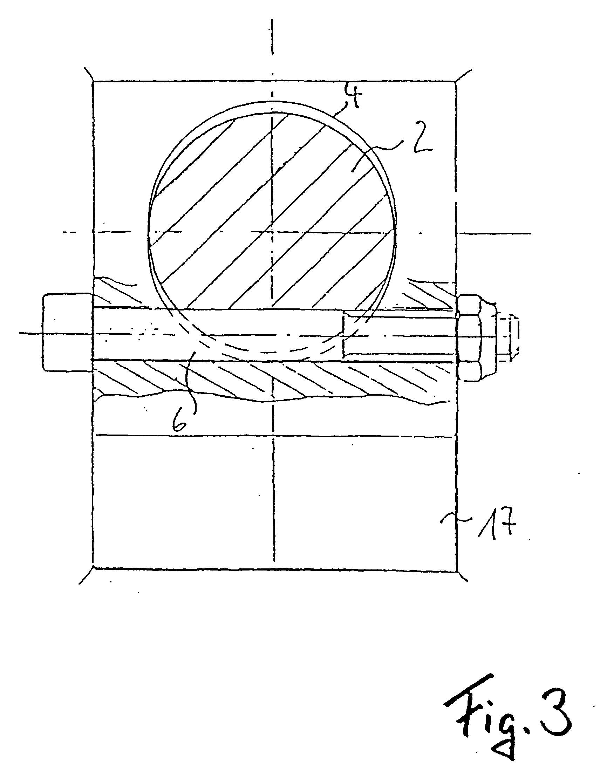

Fig. 3 zeigt eine teilgeschnittene Darstellung gemäß der Linie A-A von Fig. 1, in der die Verschraubung deutlicher zu sehen ist. So zeigt Fig. 3 den als Zylinderschraube ausgebildeten Lagerstift 6 und dessen Verschraubung an der Tragvorrichtung 1. Zur Verstärkung der linken Öffnung 4 ist die Tragvorrichtung 1 in diesem Bereich mit einem Verstärkungselement 17 versehen, das seitlich an der Tragvorrichtung 1 befestigt ist. In Fig. 3 ist die Öffnung 4 oval ausgebildet; selbstverständlich kann Öffnung 4 weniger vorteilhaft auch einen kreisförmigen Querschnitt aufweisen, so daß die Achse 2 mit Radialspiel in die Öffnung 4 der Tragvorrichtung 1 einsetzbar ist.

Die Tiefe der rechtwinklig zur Achsenlängsrichtung angeordneten Tangentialnut 5 ist um das Spiel 18 geringer als der Durchmesser des Lagerstifts 6, wodurch die Achse 2 um einen kleinen Winkelbereich um den Lagerstift 6 schwenkbar ist. Das andere die Tragvorrichtung 1 seitlich durchdringende Ende der Achse 2 ist in einer Öffnung 7 des ausgebildeten Lastelementes 8 abgestützt; das der Öffnung 7 gegenüberliegende Ende des Lastelementes 8 ist an der Tragvorrichtung 1 befestigt. Wie aus Fig. 1 zu erkennen ist, erfolgt die Befestigung des Lastelementes 8 an einem an der Tragvorrichtung 1 angeflanschten Zylinder 9.

Zur Übertragung der Lastkräfte ist eine Seilrolle 10 frei drehbar über ein Drehlager 11 auf der Achse 2 abgestützt. Seitlich wird das Drehlager 11 jeweils von einem elastischen Stützring 12 axial gehalten.

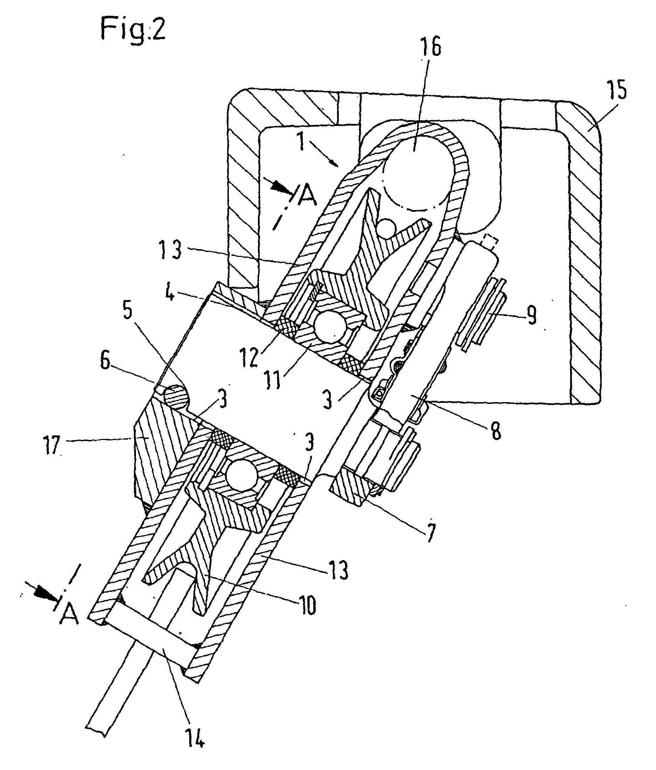

Dünne Tragbleche sind als seitliche Träger 13 der Tragvorrichtung 1 vorgesehen. Um die Biegebeanspruchung gering zu halten, sind diese Tragbleche unterhalb der Seilrolle 10 über ein Distanzstück 14 fest verbunden. Wie Fig. 2 deutlich zeigt, ist die Tragvorrichtung 1 in einem Tragrahmen 15 rechtwinklig zur Achse 2 schwenkbar gelagert; hierzu ist der Tragrahmen 15 mit einer zylindrischen Schwenkachse versehen. Fig. 2 zeigt die Meßeinrichtung gegenüber dem Tragrahmen 15 um einen Winkel von 30° geschwenkt.

### BEZUGSZEICHENLISTE:

- 1: Tragvorrichtung
- 2: Achse
- 3: Öffnung
- 4: Öffnung
- 5: Tangentialnut
- 6: Lagerstift
- 7: Öffnung
- 8: Lastmeßelement
- 9: Zylinder
- 10: Seilrolle
- 11: Drehlager
- 12: Stützring
- 13: seitlicher Träger
- 14: Distanzstück
- 15: Tragrahmen
- 16: Schwenkachse
- 17: Verstärkungselement
- 18: Spiel

## Patentansprüche

1. Meßeinrichtung mit einem Lastmeßelement (8) für Hebezeuge, insbesondere für Oberflaschen von Hebezeugen, mit einer zur Aufnahme und Aufteilung von Lastkräften vorgesehenen Achse (2), deren Enden auf einer Seite über ein Lager und auf der anderen Seite über das Lastmeßelement (8) in einer Tragvorrichtung (1) abgestützt und axial fixiert sind,
**dadurch gekennzeichnet,**
**daß** das Lager derart gebildet ist,
**daß** die Achse (2) quer zu ihrer Längsrichtung eine Tangentialnut (5) aufweist und in eine Öffnung (4) der Tragvorrichtung (1) mit einem Spiel (18) eingesetzt ist, wobei das Spiel (18) mindestens der Tangentialnut (5) gegenüberliegend ausgebildet ist, und
**daß** zur axialen Sicherung und zur Auflagerung der Achse (2) an der Tragvorrichtung (1) ein Lagerstift (6) befestigt ist,
wobei der Lagerstift (6) mindestens teilweise in die Tangentialnut (5) eingreift.

2. Meßeinrichtung nach Anspruch 1,
**dadurch gekennzeichnet,**
**daß** die Tragvorrichtung (1) als seitliche Träger (13) Tragbleche aufweist, welche am unteren Ende durch ein Distanzstück (14) miteinander verbunden sind.

3. Meßeinrichtung nach Anspruch 1 oder 2,
**dadurch gekennzeichnet,**
**daß** die Öffnungen (3, 4) oval ausgebildet sind, wobei die waagerechte Breite in etwa dem Durchmesser der Achse (2) entspricht.

4. Meßeinrichtung nach einem der Ansprüche 1 bis 3,
**dadurch gekennzeichnet,**
**daß** auf der Achse (2) zumindest eine frei drehbare Seilrolle (10) über ein Drehlager (11) abgestützt ist.

5. Meßeinrichtung nach einem der Ansprüche 1 bis 4,
**dadurch gekennzeichnet,**
**daß** das Drehlager (11) beidseitig über elastische Stützringe (12) axial gehalten ist.

6. Meßeinrichtung nach einem der Ansprüche 1 bis 5,
**dadurch gekennzeichnet,**
**daß** die Tangentialnut (5) rechtwinklig zur Achsenlängsrichtung angeordnet ist.

7. Meßeinrichtung nach einem der Ansprüche 1 bis 6,
**dadurch gekennzeichnet,**
**daß** der Lagerstift (6) als Zylinderschraube ausgebildet ist, die an der Tragvorrichtung (1) verschraubt ist.

8. Meßeinrichtung nach einem der Ansprüche 1 bis 7,
**dadurch gekennzeichnet,**
**daß** die Tragvorrichtung (1) in einem Tragrahmen (15) senkrecht zur Achse (2) schwenkbar gelagert ist.

9. Meßeinrichtung nach einem der Ansprüche 1 bis 8,
**dadurch gekennzeichnet,**
**daß** das Lastmeßelement (8) mit Dehnungsmeßstreifen oder mit Mikroschaltern versehen ist.

## Claims

1. A measuring apparatus with a load-measuring element (8) for lifting gear, in particular for upper pulleys of lifting gear, with a shaft (2) intended for receiving and distributing loads, the ends of which are supported and axially fixed on one side via a bearing and on the other side via the load-measuring element (8) in a supporting device (1),
**characterised in that**
the bearing is constructed such that
the shaft (2) has a tangential groove (5) transversely to its longitudinal direction and is inserted into an opening (4) in the supporting device (1) with a clearance (18), the clearance (18) being formed at least opposite the tangential groove (5), and
that a bearing pin (6) for axially securing and mounting the shaft (2) is fastened on the supporting device (1),
the bearing pin (6) engaging at least in part in the tangential groove (5).

2. A measuring apparatus according to Claim 1, **characterised in that** the supporting device (1) has supporting plates as lateral supports (13), which plates are joined together at the lower end by a spacer (14).

3. A measuring apparatus according to Claim 1 or 2, **characterised in that** the openings (3, 4) are oval in shape, the horizontal width approximately corresponding to the diameter of the shaft (2).

4. A measuring apparatus according to one of Claims 1 to 3, **characterised in that** at least one freely-rotating cable roller (10) is supported on the shaft (2) by means of a pivot bearing (11).

5. A measuring apparatus according to one of Claims 1 to 4, **characterised in that** the pivot bearing (11) is held axially on both sides by means of elastic supporting rings (12).

6. A measuring apparatus according to one of Claims 1 to 5, **characterised in that** the tangential groove (5) is arranged at right-angles to the longitudinal direction of the shaft (2).

7. A measuring apparatus according to one of Claims 1 to 6, **characterised in that** the bearing pin (6) is designed as a fillister-head screw which is screwed to the supporting device (1).

8. A measuring apparatus according to one of Claims 1 to 7, **characterised in that** the supporting device (1) is pivotably mounted in a supporting frame (15) perpendicular to the shaft (2).

9. A measuring apparatus according to one of Claims 1 to 8, **characterised in that** the load-measuring element (8) is provided with wire strain gauges or with microswitches.

## Revendications

1. Dispositif de mesure comportant un élément de mesure de charge (8) pour des engins de levage, notamment pour des moufles supérieures d'engins de levage, comportant un axe (2) servant à recevoir et répartir des forces de charge et dont les extrémités sont supportées et fixées axialement d'un côté par l'intermédiaire d'un palier et de l'autre côté par l'intermédiaire de l'élément de mesure de charge (8) dans un dispositif de support (1),
**caractérisé en ce que** le palier est agencé de telle sorte que l'axe (2) possède, transversalement par rapport à sa direction longitudinale, une gorge tangentielle (5) et est inséré dans une ouverture (4) du dispositif de support (1), avec un jeu (18), le jeu (18) étant formé au moins en vis-à-vis de la gorge tangentielle (5), et **en ce qu'**une tige de palier (6) est fixée sur le dispositif de support (1) pour le blocage axial et le support de l'axe (2), la tige de palier (6) s'engageant au moins en partie dans la gorge tangentielle (5).

2. Dispositif de mesure selon la revendication 1, **caractérisé en ce que** le dispositif de support (1) comporte, en tant que supports latéraux (13), des tôles de support, qui sont reliées entre elles, au niveau de l'extrémité inférieure, par une entretoise (14).

3. Dispositif de mesure selon la revendication 1 ou 2, **caractérisé en ce que** les ouvertures (3, 4) sont conformées à une forme ovale, la largeur horizontale correspondant approximativement au diamètre de l'axe (2).

4. Dispositif de mesure selon l'une des revendications 1 à 3, **caractérisé en ce qu'**au moins une poulie de câble (10) pouvant tourner librement est supportée par l'axe (2) par l'intermédiaire d'un palier tournant (11).

5. Dispositif de mesure selon l'une des revendications 1 à 4, **caractérisé en ce que** le palier tournant (11) est retenu axialement des deux côtés au moyen de bagues d'appui élastiques (12).

6. Dispositif de mesure selon l'une des revendications 1 à 5, **caractérisé en ce que** la gorge tangentielle (5) est disposée à angle droit par rapport à la direction longitudinale de l'axe.

7. Dispositif de mesure selon l'une des revendications 1 à 6, **caractérisé en ce que** la tige de palier (6) est conformée en une vis cylindrique, qui est vissée sur le dispositif de support (1).

8. Dispositif de mesure selon l'une des revendications 1 à 7, **caractérisé en ce que** le dispositif de support (1) est monté dans un cadre de support (15) de manière à pouvoir pivoter perpendiculairement à l'axe (2).

9. Dispositif de mesure selon l'une des revendications 1 à 8, **caractérisé en ce que** l'élément de mesure de charge (8) comporte des jauges extensométriques ou des micro-interrupteurs.
